Europäisches Patentamt

European Patent Office

Office européen des brevets

(11) Veröffentlichungsnummer: **0 051 727**
**A1**

## (12) EUROPÄISCHE PATENTANMELDUNG

(21) Anmeldenummer: 81107398.0

(22) Anmeldetag: 18.09.81

(51) Int. Cl.³: **G 02 B 7/26**

(30) Priorität: 12.11.80 DE 3042563

(43) Veröffentlichungstag der Anmeldung: 19.05.82
Patentblatt 82/20

(84) Benannte Vertragsstaaten: **FR GB IT**

(71) Anmelder: **Felten & Guilleaume Carlswerk
Aktiengesellschaft,
Schanzenstrasse 24 Postfach 80 50 01,
D-5000 Köln 80 (DE)**

(72) Erfinder: **Rittich, Dieter, Dipl.-Ing., Schubertstrasse 4,
D-5050 Berg. Gladbach 1 (DE)**
Erfinder: **Nicia, Antonius, Dipl.-Ing., Kruburg 42,
Eindhoven (NL)**
Erfinder: **Khoe, Giok-djan, Dipl.-Ing.,
Grevenmacherhof 50, Eindhoven (NL)**

(54) **Lichtleiterverzweigung aus Lichtleitfasern unterschiedlichen Durchmessers.**

(57) Die Erfindung bezieht sich auf eine Lichtleiterverzweigung mit mindestens drei Lichtleitfasern, wobei die
polierte Endfläche einer gemeinsamen Lichtleitfaser mit
den polierten Endflächen der abzweigenden Lichtleitfasern
durch Verkleben verbunden ist, und wobei die Durchmesser
der abzweigenden Lichtleitfasern kleiner als der Durchmesser der gemeinsamen Lichtleitfaser sind. Die Aufgabe besteht darin, die in einer solchen Verzweigung auftretenden
Lichtverluste wesentlich zu vermindern. Die Lösung besteht
im wesentlichen darin, daß die Kerne der abzweigenden
Lichtleitfasern so bearbeitet werden, daß ihre Ränder den
Rand des Kerns der gemeinsamen LLF nicht überragen. Die
Erfindung wird hauptsächlich angewandt als optischer Multiplexer für die Nachrichtenübermittlung über Lichtleitfasern.

F1 4583 · 1 15.06.81

Lichtleiterverzweigung aus Lichtleitfasern unterschiedlichen Durchmessers

---

Die Erfindung betrifft eine Lichtleiterverzweigung mit mindestens drei Lichtleitfasern (LLF), die jeweils aus einem lichtleitenden Kern und einem Mantel bestehen, dessen Brechungsindex kleiner ist als der Brechungsindex des Kerns, wobei die polierte Endfläche einer gemeinsamen Lichtleitfaser mit den polierten Endflächen der abzweigenden Lichtleitfasern durch Verkleben verbunden ist, und wobei die Durchmesser d der Kerne der abzweigenden Lichtleitfasern kleiner als der Durchmesser D des Kerns der gemeinsamen Lichtleitfaser sind.

Lichtleiterverzweigungen werden vorwiegend verwendet, wenn eine gemeinsame Lichtleitfaser meist größerer Länge mit mehreren Lichtsendern, mehreren Lichtempfängern oder zusätzlichen Meß- und Regelgeräten verbunden werden soll.

Bekannt ist bereits eine Lichtleiterverzweigung mit drei
Lichtleitfasern, wobei die polierte Endfläche einer gemeinsamen Lichtleitfaser mit den polierten Endflächen der abzweigenden Lichtleitfasern, die den gleichen Durchmesser wie die
gemeinsame Lichtleitfaser aufweisen, durch Verkleben derart
verbunden ist, daß die Endflächen der abzweigenden Lichtleitfasern durch schräg zur Faserlängsachse verlaufende Flächen

zu Halbkreisen abgearbeitet sind, die zu einer gemeinsamen
Kreisfläche zusammengesetzt und mit der Endfläche der gemeinsamen Lichtleitfaser verbunden werden (The transactions of the
IECE of Japan, Volume E 60, Nr. 3, S. 133-34).

Eine Lichtleiterverzweigung der bekannten Art hat den Nachteil,
daß bei Lichteinspeisung mit gleichmäßiger Anregung aller Moden
aus einer der abzweigenden Lichtleitfasern in die gemeinsame
Lichtleitfaser bestenfalls die Hälfte der in der abzweigenden
Faser zugeführten Lichtenergie in die gemeinsame Lichtleitfaser
eingespeist werden kann. Dieser Nachteil ergibt sich daraus,
daß an der Verbindungsstelle der Fasern von den abzweigenden
Lichtleitfasern jeweils nur noch der halbe Querschnitt zur Verfügung steht.

Bekannt ist ferner eine Lichtleiterverzweigung mit mehr als
zwei abzweigenden Lichtleitfasern, deren Endflächen entsprechend abgearbeitet, zu einer gemeinsamen Kreisfläche zusammengesetzt und mit der Endfläche der gemeinsamen Faser verbunden
werden (DE-OS 27 38 050, Fig. 9 und 10). Für Anwendungsfälle,
bei denen Licht durch die abzweigenden Lichtleitfasern in die
gemeinsame Lichtleitfaser eingekoppelt werden soll, hat diese
Verzweigung ebenfalls den Nachteil, daß nur ein den abgearbeiteten Endflächen entsprechender Anteil des Lichtes in die
gemeinsame Lichtleitfaser eingekoppelt werden kann.

Bekannt ist auch ein Frequenz-Multiplexsystem für die optische
Übermittlung von Breitband-Signalen mit mehreren Lichtquellen,
die mit verschiedenen Trägerfrequenzen moduliert werden und
über Lichtleitfasern mit einer gemeinsamen Lichtleitfaser verbunden sind, wobei die Lichtleitfasern von den Lichtquellen
einen kleineren Durchmesser haben als die gemeinsame Lichtleitfaser (US-PS 4 232 385). Über die Gestaltung der Übergangsstelle
zwischen den Einzelfasern und der gemeinsamen Faser und ihre Bemessung sind diesem Stand der Technik keine Hinweise zu entnehmen.


Der Erfindung liegt die Aufgabe zugrunde, eine Lichtleiterverzweigung zu schaffen, bei der ein möglichst großer Anteil des
aus den abzweigenden Lichtleitfasern kommenden Lichtes in die
gemeinsame Lichtleitfaser eingekoppelt werden kann, oder, mit
anderen Worten, einen möglichst verlustarmen optischen Lichtmultiplexer anzugeben.

Diese Aufgabe wird erfindungsgemäß dadurch gelöst, daß die
Durchmesser der Kerne der abzweigenden Lichtleitfasern größer
als der halbe Durchmesser des Kerns der gemeinsamen Lichtleitfaser sind, und daß jede Endfläche der abzweigenden Lichtleitfasern durch schräg zur Faserlängsachse verlaufende Flächen
soweit verkleinert ist, daß der unbearbeitete Rand des Kerns
jeder Endfläche den Rand des Kerns der Endfläche der gemeinsamen Lichtleitfaser nicht überragt. Ausgestaltungen der Erfindung sind in den Ansprüchen 2 bis 3 angegeben, eine Anwendung im Anspruch 4.

Der mit der Erfindung erzielbare Vorteil besteht insbesondere
darin, daß durch die Wahl der Durchmesserverhältnisse des
Kerns von gemeinsamer und abzweigenden Lichtleitfasern der
Lichtverlust beliebig vermindert und theoretisch völlig vermieden werden kann. Ein weiterer Vorteil besteht darin, daß
die Dämpfung für aus der gemeinsamen Lichtleitfaser zurückstrahlendes Licht, wie es durch Fehlerstellen in dieser Faser
oder sonstige Reflexionsstellen auftreten kann, wesentlich
größer ist als bei bekannten Verzweigungen. Dadurch werden
Störungen, die die Rückstrahlung in als Lichtquellen an den
abzweigenden Fasern verwendeten Lasern verursachen kann, weitgehend vermindert. Eine die Rückstrahlung besonders stark
dämpfende Verzweigung, wie sie bei Verwendung von Monomodefaser für die abzweigenden LLF entsteht, kann also auch als
ein optischer Isolator verwendet werden.

Ausführungsbeispiele der Erfindung sind in der Zeichnung angegeben und werden im folgenden näher beschrieben. Es zeigen:

Fig. 1 eine Lichtleiterverzweigung mit zwei abzweigenden
       Lichtleitfasern

Fig. 2 eine Verzweigung mit vier abzweigenden Lichtleitfasern

Fig. 3 eine Verzweigung mit zwei abzweigenden Lichtleitfasern,
       deren Kerndurchmesser $d$ = dem Kerndurchmesser $D$ der
       gemeinsamen Lichtleitfaser ist

Fig. 4 eine Verzweigung mit drei abzweigenden Lichtleitfasern
       mit $d$ etwas kleiner als 0,5 $D$

Fig. 5 eine Verzweigung mit drei abzweigenden Lichtleitfasern
       mit $d$ viel kleiner als 0,5 $D$.

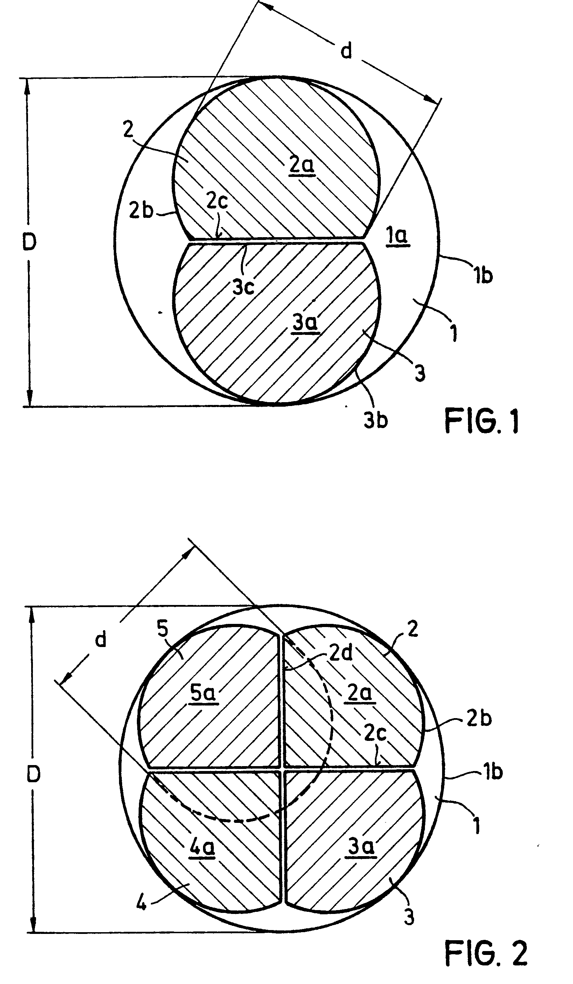

In Fig. 1 ist eine Lichtleiterverzweigung in einem Querschnitt nahe der Verbindungsstelle zwischen der gemeinsamen
Lichtleitfaser LLF 1 und den zwei abzweigenden LLF 2 und 3
schematisch dargestellt. Diese wie auch die folgenden Darstellungen berücksichtigt lediglich die das Licht leitenden Faserkerne, nicht aber die die Kerne umgebenden, für die
Lichtleitung ebenfalls wesentlichen Mäntel aus einem Werkstoff, dessen Brechungsindex kleiner ist als der der Faserkerne.

Von der gemeinsamen LLF 1 ist die polierte·Endfläche 1a des
Faserkerns mit dem Durchmesser D teilweise sichtbar, ihr Rand,
an den sich der nicht gezeichnete Mantel anschließt, ist mit
1b bezeichnet. Auf die Endfläche 1a sind die Endflächen der
Kerne der abzweigenden LLF 2 und 3 aufgeklebt, deren Form etwa
den dargestellten Schnittflächen 2a und 3a entsprechen. Der
Durchmesser dieser unbearbeiteten Kerne ist mit d bezeichnet.
Er ist kleiner als der Durchmesser D des Kerns 1 der gemeinsamen LLF. An die Enden der abzweigenden Faserkerne 2 und 3
sind schräg zur Längsachse der Fasern verlaufende Flächen 2c
und 3c angearbeitet, beispielsweise durch Schleifen und Polieren. Es ist ersichtlich, daß die nicht dargestellten Fasermäntel ebenfalls durch die Verlängerungen der Flächen 2c und
3c begrenzt sein müssen.

Wenn man nun einmal davon ausgeht, daß durch den gesamten
Kernquerschnitt einer LLF die Lichtleitung etwa gleichmäßig
verteilt erfolgt, so ist aus der Fig. 1 ebenfalls ersichtlich,
daß der Verlust an Lichtenergie, die an der Endfläche 2a oder
3a einer lichtführenden LLF 2 oder 3 zur Verfügung steht, umso
größer wird, je mehr Kernmaterial bei der Herstellung einer
Lichtleiterverzweigung entfernt werden muß. Bei einer bekannten Verzweigung, bei der die abzweigenden LLF den gleichen
Durchmesser und damit etwa den gleichen Kerndurchmesser wie
die gemeinsame LLF haben, beträgt der Kernquerschnitt der abzweigenden LLF an der Koppelstelle nur die Hälfte der ursprünglichen Querschnittsfläche, der Lichtverlust beträgt somit wenigstens 50 % oder 3 db.

Bei einer Lichtleiterverzweigung in der Ausführung nach Fig. 1
beträgt beispielsweise der Kerndurchmesser D der gemeinsamen
LLF 1 50 µm, der der abzweigenden LLF 2 und 3 etwa 30 µm.
Diese Werte haben sich als besonders vorteilhaft erwiesen,
da einmal die Lichtauskopplung aus üblicherweise für die Nachrichtenübertragung verwendeten Lasern bei Faserdurchmessern
bis herunter zu 30 mm nicht wesentlich verschlechtert wird,
andererseits braucht bei diesen Werten nur etwa 10 % des Kernquerschnitts der abzweigenden Fasern entfernt zu werden. Daraus ergeben sich unter Beibehaltung der vorstehenden Annahme
für die gleichmäßige Verteilung der Lichtleistung über die
Querschnittsfläche bereits sehr geringe Dämpfungswerte.

Die genannte Annahme gilt aber angenähert nur für Step-Index-
Fasern. Bei den für die Nachrichtenübertragung vorwiegend verwendeten Gradienten-Fasern ist die Verteilung der Lichtleistung
über die Querschnittsfläche des Faserkerns proportional dem
Brechungsindex, der Anteil der in der Nähe der Längsachse des
Kerns geführten Lichtleistung ist also wesentlich größer als
nach der vereinfachten ersten Annahme. Es ergeben sich somit
günstigere Verhältnisse für den Zusammenhang zwischen Dämpfung
und kleinen Verminderungen der Querschnittsfläche. Mit einer
Verzweigung nach Fig. mit Gradienten-Fasern sind Dämpfungswerte
von 0,2 db erzielt worden.

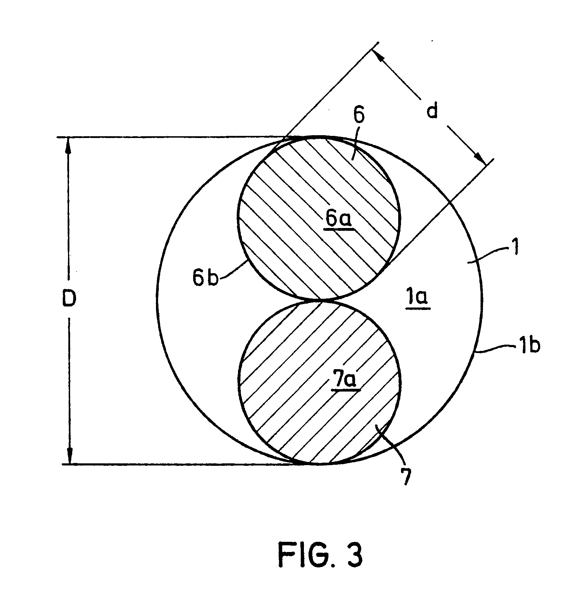

Noch augenscheinlicher wird die beschriebene Verminderung der
Dämpfung bei einer Verzweigung gemäß Fig. 2 mit vier abzweigenden LLF 2, 3, 4 und 5. Die gemeinsame LLF und ihre Teile
sind wieder mit dem Bezugszeichen 1 versehen. Die durch die
Bearbeitung der Kerne entstehenden, mit Winkeln von 1-2$^{o}$
schräg zur Längsachse des Kerns 2 verlaufenden Flächen sind
hier mit 2c und 2d bezeichnet. Würde man eine solche Verzweigung nach der bekannten Weise ausführen, wäre der Verlust an
aus den abzweigenden LLF auskoppelbaren Lichtes jeweils 75 %
entsprechend einer Dämpfung von 6 db. Setzt man die obengenannten Werte für die Kerndurchmesser hier ein, entstehen
durch die wesentlich geringere Querschnittsverminderung nur
Verluste von etwa 1,4 db.

0051727

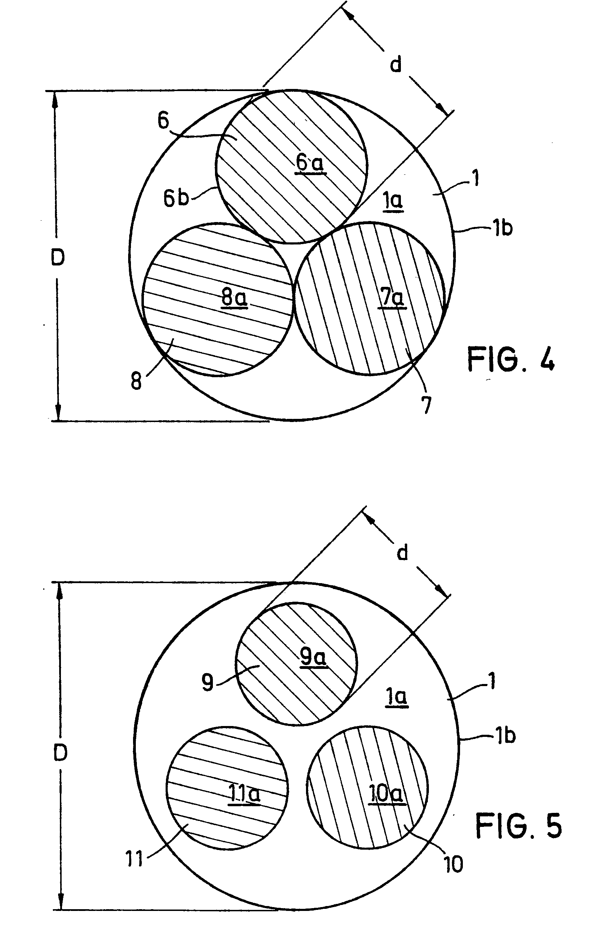

Eine weitere Ausgestaltung ist in Fig. 3 schematisch darge-stellt. Die abzweigenden LLF 6 und 7 haben einen Kerndurchmesser d, der gerade halb so groß ist, wie der Kerndurch-messer D der gemeinsamen LLF 1. Dabei braucht der Querschnitt der Kerne 6a und 7a nicht mehr abgearbeitet zu werden, Lichtverluste durch Querschnittsverminderungen entstehen nicht mehr. Diese Ausgestaltung ist also besonders für Lichtleiterverzweigungen mit zwei abzweigenden LLF geeignet.

Will man von derem Vorteil auch bei drei und mehr abzweigenden LLF Gebrauch machen, ist die Ausgestaltung gemäß Fig. 4 anwendbar. Der Kerndurchmesser d der drei abzweigenden LLF 6, 7 und 8 muß hier etwas kleiner sein als der halbe Kerndurchmesser D der gemeinsamen LLF 1, was mit handelsüblichen Multimode-fasern noch zu verwirklichen ist.

Eine weitere Ausgestaltung ist in Fig. 5 dargestellt. Der Kerndurchmesser d der im Beispiel drei abzweigenden LLF 9, 10 und 11 ist hier wesentlich kleiner als der halbe Kerndurchmesser D der gemeinsamen LLF 1. Diese Ausführung ist auch mit größeren Zahlen von abzweigenden LLF zu verwirklichen, wenn als abzweigende LLF Monomodefasern gewählt werden, deren Kerndurchmesser d in der Größenordnung von 6 bis 12 um je nach der verwendeten Lichtwellenlänge liegen. Die bei dieser Faserart noch bestehenden Schwierigkeiten bei der Verbindungstechnik Faser-Faser, die ihren Einsatz in größerem Maß bisher behindern, spielen bei der Verwendung einer Lichtleiterverzweigung als Multiplexer, wobei das Licht mehrerer Laser in eine gemeinsame, notwendigerweise Multimodefaser eingespeist werden soll, keine störende Rolle, da das Problem der Ankopplung einer **Monomodefaser an einen Monomoden-Laser als weitestgehend gelöst angesehen werden kann. Hierbei lassen sich heute Wir-kungsgrade von 99 % erreichen.**

0051727

F1 4583                          1                        15.06.81

Ansprüche:

1. Lichtleiterverzweigung mit mindestens drei Lichtleitfasern
   (LLF), die jeweils aus einem lichtleitenden Kern und einem
   Mantel bestehen, dessen Brechungsindex kleiner ist als der
   Brechungsindex des Kerns, wobei die polierte Oberfläche
   einer gemeinsamen Lichtleitfaser mit den polierten Endflächen der abzweigenden Lichtleitfasern durch Verkleben verbunden ist, und wobei die Durchmesser d der Kerne der abzweigenden Lichtleitfasern kleiner als der Durchmesser D
   des Kerns der gemeinsamen Lichtleitfaser sind, d a d u r c h
   g e k e n n z e i c h n e t, daß die Durchmesser (d) der
   Kerne der abzweigenden Lichtleitfasern (2,3,4,5) größer
   als der halbe Durchmesser (D) des Kerns der gemeinsamen
   Lichtleitfaser (1) sind, und daß jede Endfläche (2a,3a,4a,
   5a) der abzweigenden Lichtleitfaser (2,3,4,5) durch schräg
   zur Faserlängsachse verlaufende Flächen (2c,3c,4c,5c, und
   2d,3d,4d,5d) so weit verkleinert ist, daß der unbearbeitete Rand (2b,3b,4b,5b) des Kerns jeder Endfläche (2a,3a,4a,
   5a) den Rand (1b) des Kerns der Endfläche (1a) der gemeinsamen Lichtleitfaser (1) nicht überragt.

2. Lichtleiterverzweigung nach Anspruch 1, d a d u r c h
   g e k e n n z e i c h n e t, daß die Durchmesser (d) der
   Kerne der abzweigenden Lichtleitfasern (6,7) gleich dem
   halben Durchmesser (D) des Kerns der gemeinsamen Lichtleitfaser (1) sind und daß die Ränder (6b,7b) der Endflächen (6a,7a) der Kerne der abzweigenden Lichtleitfasern
   (6,7) unbearbeitet sind.

3. Lichtleiterverzweigung nach Anspruch 1, d a d u r c h
   g e k e n n z e i c h n e t, daß die Durchmesser (d) der
   Kerne der abzweigenden Lichtleitfasern (9,10,11) kleiner
   als der halbe Durchmesser (D) des Kerns der gemeinsamen
   Lichtleitfaser (1) sind.

4. Anwendung einer Lichtleiterverzweigung nach einem der Ansprüche 1 bis 3 als Multiplexer in Übertragungsanlagen,
   wobei Licht von wenigstens zwei Lichtquellen durch die
   abzweigenden Lichtleitfasern (2,3,4,5,6,7,8,9 oder 10)
   in der gemeinsamen Lichtleitfaser (1) übertragen wird.

F1 4583

0051727

FIG. 1

FIG. 2

Fl 4583

0051727

FIG. 3

0051727

FIG. 4

FIG. 5

**Europäisches Patentamt**

**EUROPÄISCHER RECHERCHENBERICHT**

0051727

Nummer der Anmeldung

EP 81 10 7398.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | OPTISCHE NACHRICHTENTECHNIK Band 31, Nr. 6, 1978 U. KALMBACH et al. "Abzweig für Licht- leitfasern" Seiten 423 bis 425 -- | 1 |
| Y | DE - A1 - 2 717 535 (SIEMENS AG) * Ansprüche 1, 2 * -- | 1 |
| Y | DE - A1 - 2 653 815 (THOMSON-CSF) * Seite 10; Fig. * -- | 3 |
| Y | DE - A1 - 2 744 108 (THOMSON-CSF) * Fig. 2, 4 * -- | 3 |
| A | IBM TECHNICAL DISCLOSURE BULLETIN Band 23, Nr. 4, September 1980 J.D. CROW et al. "Nonsymmetric Optical Star Coupler" Seite 1686 -- | 2 |
| D,A | US - A - 4 232 385 (E.H. HARA et al.) * Fig. 4 * ---- | 4 |

**KLASSIFIKATION DER ANMELDUNG (Int. Cl. ³)**

G 02 B 7/26

**RECHERCHIERTE SACHGEBIETE (Int. Cl. ³)**

G 02 B 7/26

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie- gende Theorien oder Grund- sätze
E: älteres Patentdokument, das jedoch erst am oder nach dem Anmeldedatum veroffentlicht worden ist
D: in der Anmeldung angefuhrtes Dokument
L: aus andern Grunden ange- fuhrtes Dokument
&: Mitglied der gleichen Patent- familie, ubereinstimmendes Dokument

Der vorliegende Recherchenbericht wurde fur alle Patentanspruche erstellt.

| Recherchenort | Abschlußdatum der Recherche | Prufer |
|---|---|---|
| Berlin | 17-02-1982 | FUCHS |

EPA form 1503.1   06.78